(19) Europäisches Patentamt
European Patent Office
Office européen des brevets

(11) Publication number: **0 537 767 A1**

# (12) EUROPEAN PATENT APPLICATION

(21) Application number: **92117727.5**

(22) Date of filing: **16.10.92**

(51) Int. Cl.5: **C08L 33/02**, //(C08L33/02, 101:00,63:00)

(30) Priority: **17.10.91 JP 269340/91**

(43) Date of publication of application: **21.04.93 Bulletin 93/16**

(84) Designated Contracting States: **DE FR GB IT NL**

(71) Applicant: **SUMITOMO CHEMICAL COMPANY, LIMITED**
**Kitahama 4-chome 5-33**
**Chuo-ku Osaka 541(JP)**

(72) Inventor: **Date, Shinji**
**3-9-7-201, Kurosuna, Inage-ku**
**Chiba-shi, Chiba-ken(JP)**
Inventor: **Koyama, Teruhisa**
**3-9-6-302, Kurosuna, Inage-ku**
**Chiba-shi, Chiba-ken(JP)**

(74) Representative: **Vossius & Partner**
**Siebertstrasse 4 P.O. Box 86 07 67**
**W-8000 München 86 (DE)**

## (54) Thermoplastic resin composition.

(57) A thermoplastic resin composition containing (A) a copolymer comprising (a) 10 to 95 % by weight of repeating units derived from methyl methacrylate and (b) 5 to 35 % by weight of (meth)acrylic acid repeating units and glutaric anhydride repeating units in which the glutaric anhydride repeating units is at least 55 % by weight the both repeating units, and (c) 0 to 55 % by weight of repeating units derived from at least one other copolymerizable $\alpha,\beta$-ethylenically unsaturated monomer, (B) at least one thermoplastic resin other than an olefin polymer, and (C) an epoxy group-containing copolymer, in which a weight ratio of the copolymer (A) to the thermoplastic resin (B) is from 1:99 to 99:1 and an amount of the epoxy group-containing copolymer (C) is from 0.1 to 50 parts by weight per 100 parts by weight of the total weight of the copolymer (A) and the thermoplastic resin (B), which composition has well balanced properties.

EP 0 537 767 A1

The present invention relates to a thermoplastic resin composition comprising plural thermoplastic resins and having good properties.

Thermoplastic resins are used in various fields by making the best use of their properties. Recently, it is found that a mixture of two or more thermoplastic resins has better properties than each of them and many mixtures have been proposed.

Japanese Patent Kokai Publication No. 67557/1985 discloses a thermoplastic resin composition comprising a polymer having cyclic repeating units of glutaric anhydride and a graft copolymer which comprises a rubber polymer or which an ethylenically unsaturated monomer is graft polymerized.

This thermoplastic resin composition should contain the graft copolymer in a higher percentage in order to satisfy higher requirement for impact resistance, while the heat resistance which is one of the characteristics of the polymer having the repeating units of glutaric anhydride is deteriorated.

Japanese Patent Kokai Publication No. 81239/1985 discloses a thermoplastic resin composition with excellent heat resistance comprising a polymer having cyclic repeating units of glutaric anhydride and a polymer of a vinyl monomer or a mixture of vinyl monomers.

This thermoplastic resin composition has improved heat resistance but insufficient impact resistance.

Japanese Patent Kokai Publication No. 106945/1987 discloses a thermoplastic resin composition comprising a copolymer which comprises repeating units derived from methyl methacrylate, a six-membered ring acid anhydride, an aromatic vinyl compound and (meth)acrylic acid, and a copolymer which comprises repeating units derived from methyl methacrylate, maleic anhydride and an aromatic vinyl compound.

This thermoplastic resin composition has high heat resistance but its impact resistance is not improved.

Japanese Patent Kokai Publication No. 106946/1987 discloses a thermoplastic resin composition comprising a copolymer which comprises repeating units derived from methyl methacrylate, a six-membered ring acid anhydride, an aromatic vinyl compound and (meth)acrylic acid, and a copolymer which comprises repeating units derived from methyl methacrylate, an alkyl acrylate and an aromatic vinyl compound.

In this thermoplastic resin composition, the former copolymer can improve the heat resistance of the latter copolymer but not the impact resistance.

An object of the present invention is to provide a thermoplastic resin composition which has high heat resistance and stiffness and is excellent in impact resistance.

This object has been achieved by a thermoplastic resin composition comprising

(A) a copolymer comprising (a) 10 to 95 % by weight of repeating units derived from methyl methacrylate and (b) 5 to 35 % by weight of (meth)acrylic acid repeating units and glutaric anhydride repeating units in which the glutaric anhydride repeating units is at least 55 % by weight of the both repeating units, and (c) 0 to 55 % by weight of repeating units derived from at least one other copolymerizable $\alpha,\beta$-ethylenically unsaturated monomer,

(B) at least one thermoplastic resin other than an olefin polymer, and

(C) an epoxy group-containing copolymer, wherein a weight ratio of the copolymer (A) to the thermoplastic resin (B) is from 1:99 to 99:1 and an amount of the epoxy group-containing copolymer (C) is from 0.1 to 50 parts by weight per 100 parts by weight of the total weight of the copolymer (A) and the thermoplastic resin (B).

The copolymer (A) used according to the present invention may be prepared by polymerizing about 10 to 95 % by weight of methyl methacrylate, 5 to 35 % by weight of (meth)acrylic acid and 0 to about 55 % by weight of at least one other copolymerizable $\alpha,\beta$-ethylenically unsaturated monomer in the presence of a radical generating agent by a conventional polymerization process such as suspension polymerization, bulk polymerization, emulsion polymerization, solution polymerization and the like and then cyclizing a part of the (meth)acrylic acid repeating units by a known method.

A cyclization reaction is carried out by heating the polymer at a temperature of 150 to 350°C as described in Japanese Patent Kokai Publication Nos. 85184/1974 and 217501/1983 and GB-A-1437176. To proceed the cyclization reaction efficiently, a base compound (see Japanese Patent Kokai Publication No. 254608/1986 and corresponding U.S. Patent No. 4,789,709) or a salt of an alkali metal with an organic carboxylic acid or a carbonic acid (see Japanese Patent Kokai Publication No. 261303/1986 and corresponding U.S. Patent No. 4,789,709) as a cyclization accelerator.

The glutaric acid anhydride repeating unit in the copolymer (A) is represented by the formula:

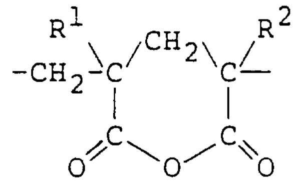

(I)

wherein $R^1$ and $R^2$ are the same or different and each a methyl group or a hydrogen atom.

In the copolymer (A), when the content of the methyl methacrylate repeating units (a) is less than 10 % by weight, the composition has decreased strength. When the content of the repeating units (a) is larger than 95 % by weight, the composition has insufficient heat resistance.

When the total content of the (meth)acrylic acid repeating units and the glutaric anhydride repeating units is less than 5 %, the heat resistance of the composition is not satisfactorily improved. When this total content is larger than 35 % by weight, a water absorption of the composition increases unpreferably. When the proportion of the glutaric anhydride repeating units in the repeating units (b) is less than 55 % by weight, the water absorbance of the composition also increases. Preferably, this proportion is at least 60 % by weight. When the content of the repeating units of the other copolymerizable $\alpha,\beta$-ethylenically unsaturated monomer (c) is larger than 55 % by weight, the mechanical properties, in particular the strength of the composition decreases and the heat resistance is deteriorated.

Examples of the other copolymerizable $\alpha,\beta$-ethylenically unsaturated monomer (c) are (meth)acrylic acid esters, (meth)acrylic acid, styrene, $\alpha$-methylstyrene, vinyltoluene, chlorostyrene, acrylonitrile and the like. Examples of the (meth)acrylic acid esters are methyl (meth)acrylate, ethyl (meth)acrylate, propyl (meth)acrylate, n-butyl (meth)acrylate, isobutyl (meth)acrylate, tert.-butyl (meth)acrylate, dodecyl (meth)-acrylate, cyclohexyl (meth)acrylate, norbornyl (meth)acrylate, 2-ethylhexyl (meth)acrylate, benzyl (meth)-acrylate and the like.

These monomers may be used independently or as a mixture of two or more of them.

The copolymer (A) has usually a weight average molecular weight of 40,000 to 500,000, preferably 40,000 to 200,000. When the weight average molecular weight is less than 40,000, the composition has poor mechanical strength. When the weight average molecular weight exceeds 500,000, the composition has decreased molding processability.

As the content of the copolymer (A) increases, the heat resistance and stiffness of the composition increases.

The thermoplastic resin (B) other than the olefin polymer herein used is intended to mean a resin comprising ethylene and/or propylene repeating units in an amount of 0 to less than 50 % by weight.

Examples of the thermoplastic resin (B) are polyvinyl chloride, polystyrene, polymethyl methacrylate, styrene-acrylonitrile copolymer, styrene-methyl methacrylate-acrylonitrile copolymer, $\alpha$-methylstyrene-acrylonitrilemethyl methacrylate copolymer, ABS resin, AAS resin, AES resin, MBS resin, polyurethane, polyamide, polyacetal, polycarbonate, PPE, PBT, PET, PPS, PEEK, and the like.

The epoxy group-containing copolymer (C) herein used is intended to mean a copolymer comprising an epoxy group-containing $\alpha,\beta$-ethylenically unsaturated monomer and other $\alpha,\beta$-ethylenically unsaturated monomer.

The epoxy group-containing copolymer (C) comprises 0.1 to 50 % by weight, preferably 1 to 30 % by weight of the epoxy group-containing $\alpha,\beta$-ethylenically unsaturated monomer, and 50 to 99.9 % by weight, preferably 70 to 99 % by weight of the other $\alpha,\beta$-ethylenically -unsaturated monomer.

The epoxy group-containing $\alpha,\beta$-ethylenically unsaturated monomer includes unsaturated glycidyl esters of the formula (II) and unsaturated glycidyl ethers of the formula (III):

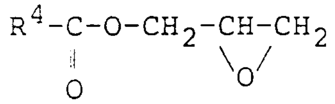

(II)

wherein $R^4$ is a hydrocarbon group having an $\alpha,\beta$-ethylenically unsaturated bond and 2 to 18 carbon atoms,

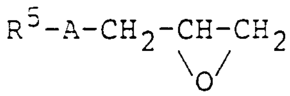

(III)

wherein $R^5$ is a hydrocarbon group having an $\alpha,\beta$-ethylenically unsaturated bond and 2 to 18 carbon atoms and A is an alkylene oxide group having 1 to 6 carbon atom or a phenylene oxide group.

Specific examples of the unsaturated glycidyl ester (II) and the unsaturated glycidyl ether (III) are glycidyl (meth)acrylate, glycidyl itaconate, allyl glycidyl ether, 2-methylallyl glycidyl ether, styrene-p-glycidyl ether, etc.

The other $\alpha,\beta$-ethylenically unsaturated monomer may be, for example, olefins, vinyl esters of aliphatic carboxylic acids having 2 to 6 carbon atoms, (meth)acrylic acid esters, maleic acid esters, fumaric acid esters, vinyl halides, styrenes, nitriles, vinyl ethers and acrylamides. Specific examples are ethylene, propylene, butene-1, vinyl acetate, methyl (meth)acrylate, ethyl (meth)acrylate, dimethyl maleate, diethyl fumarate, vinyl chloride, vinylidene chloride, styrene, acrylonitrile, isobutyl vinyl ether, acrylamide and the like. In order to improve the impact resistance at a low temperature by lowering a glass transition temperature, it is suitable to combine two or more compounds such as ethylene-vinyl acetate and ethylene-methyl acrylate.

A typical example of the epoxy group-containing copolymer (C) is an ethylene-glycidyl methacrylate copolymer.

A molecular weight of the epoxy-group containing copolymer (C) may be 10,000 to 1,000,000, preferably 20,000 to 800,000.

The epoxy group-containing copolymer (C) may be prepared by any of conventional methods. For example, the epoxy group-containing $\alpha,\beta$-ethylenically unsaturated monomer and the other $\alpha,\beta$-ethylenically unsaturated monomer are bulk polymerized or radically polymerized in an inert solvent to prepare a random copolymer, or the epoxy group-containing $\alpha,\beta$-ethylenically unsaturated monomer is impregnated in a polymer of the other $\alpha,\beta$-ethylenically unsaturated monomer and radically polymerised to prepare a graft copolymer.

Specifically, according to a method of the production of high pressure polyethylene, ethylene and the epoxy group-containing $\alpha,\beta$-ethylenically unsaturated monomer are copolymerised in the presence of a radical generating agent under pressure of 500 to 4000 Atm. at a temperature of 100 to 300 °C. In an extruder, molten polypropylene, the epoxy group-containing $\alpha,\beta$-ethylenically unsaturated monomer and the radical generating agent are kneaded and the monomer is graft copolymerized to polypropylene.

A weight ratio of the copolymer (A) to the thermoplastic resin (B) is usually from 1:99 to 99:1, preferably from 5:95 to 80:20, and an amount of the copolymer (C) is from 0.1 to 50 parts by weight, preferably from 0.5 to 25 parts by weight per 100 parts by weight of the total weight of the copolymer (A) and the thermoplastic resin (B).

When the content of the epoxy group-containing copolymer (C) is less than 0.1 part by weight, the composition has insufficient impact resistance. When this content exceeds 50 parts by weight, the heat resistance, stiffness and molding processability of the composition are deteriorated unpreferably.

The thermoplastic resin composition of the present invention can be prepared by any of conventional methods. For example, solution of the polymers (A), (B) and (C) are mixed and the solvent is evaporated off or the mixed solution is poured in a non-solvent to precipitated the polymer mixture, or the polymers in a molten state are kneaded. For melt kneading, a conventionally used single or twin screw extruder or a kneader is used. Alternatively, the polymers are directly kneaded during melt processing in injection molding or extrusion molding.

To the thermoplastic resin composition of the present invention, various known additives such as antioxidants (e.g. hindered phenol antioxidants, phosphorus antioxidants, sulfur antioxidants, etc.), weather-resisting agents (e.g. UV light absorbers, hindered amine base light-stabilizers, etc.), lubricants, antistatic agents, flame retardants, colorants, pigments and the like may be added. In some applications, reinforcing fibers such as glass fiber or inorganic fillers may be added.

The thermoplastic resin composition of the present invention is excellent in balance among the heat resistance which is represented by a heat deformation temperature, the impact resistance and the stiffness which is represented by a flexural modulus, and useful as a material of parts of electrical apparatuses, automobile parts such as interior or exterior panels, general merchandise goods, and the like.

The present invention will be explained further in detail by following Examples.

In Examples, following measurement methods are used.

Heat deformation temperature (° C)

A heat deformation temperature is measured according to ASTM D 648 under a load of 18.6 kg/$cm^2$.

Impact strength (kgf.cm/cm)

Notched Izod impact strength is measured according to ASTM D 256.

Flexural modulus (kgf/$cm^2$)

Flexural modulus is measured according to ASTM D 790.

Reference Example

(A) Preparation of a copolymer (A)

In a five liter autoclave equipped with a stirrer, hydroxycellulose (2.4 g) gas added to and dissolved in pure water (2.2 l). To a solution, methyl methacrylate (1360 g), methacrylic acid (160 g), styrene (80 g), laurylmercaptan (6.4 g) and lauroyl peroxide 5.6 g) were added and polymerization was carried out at 80° C for one hour and forty minutes while stirring and then at 100° C for one hour while stirring. The reaction mixture was washed with water, dehydrated and dried to obtain a particulate polymer.

To the particulate polymer (100 parts by weight), sodium hydroxide (0.02 parts by weight) was mixed using a Henschel mixer and the mixture was pelletized with an extruder equipped with a vent of 40 mm in diameter (VS 40-28 manufactured by Tanabe Plastics Machine Co., Ltd.) at a screw revolution of 50 rpm and a temperature of 290° C to obtain colorless clear pellets.

Contents of the methacrylic acid repeating units and the glutaric anhydride repeating units were measured by a titration method and an IR spectroscopic analysis, respectively. A content of the former was 3.7 % by weight and that of the latter was 8.8 % by weight.

Examples 1-8 and Comparative Example

The copolymer (A) prepared in Reference Example, thermoplastic resins shown in the Table and an epoxy group-containing copolymer were compounded in the amounts shown in the Table and kneaded and extruded at a resin temperature of 250° C with a twin screw extruder to obtain pallets.

The epoxy group-containing copolymer was prepared by the method described in Japanese Patent Kokai Publication No. 23490/1972 and corresponding to G.B. Patent No. 1,352,088 the disclosure of which is hereby incorporated by reference, contained 83 % by weight of ethylene, 5 % by weight of vinyl acetate and 12 % by weight of glycidyl methacrylate and had a melt index (MI) of 7 (2.16 kg, 190° C, 10 minutes).

A test sample was prepared from the pellets by means of an injection molding machine at a cylinder temperature of 260° C and a mold temperature of 60° C, and its physical properties were measured.

The results are shown in the Table.

The thermoplastic resins used in Examples are as follows:

ABS resin: Clarastick MV (manufactured by Sumitomo Dow Limited)

Polyamide: Polyamide 6 (UBE Nylon 1013 B manufactured by Ube Kosan Co., Ltd.)

Polycarbonate: Upilon S-2000 (manufactured by Mitsubishi Gas Chemical Co., Ltd.)

P-MMA: Sumipex-B MHO (manufactured by Sumitomo Chemical Co., Ltd.)

PBT resin: TORAY PBT 1401-X06 (manufactured by Toray)

Table

| Example No. | Copolymer (A) (pbw) | Thermoplastic resin: Kind | Thermoplastic resin: Amount (pbw) | Epoxy group-containing copolymer (pbw) | Heat deformation temp. (°C) | Izod impact strength (kgf.cm/cm) | Flexural modulus ($kgf/cm^2$) |
|---|---|---|---|---|---|---|---|
| 1 | 20 | ABS resin | 80 | 5 | 75 | 15 | 16500 |
| 2 | 80 | ABS resin | 20 | 5 | 90 | 5 | 24400 |
| 3 | 5 | Polycarbonate | 95 | 5 | 128 | 66 | 21500 |
| 4 | 20 | Polyamide | 80 | 5 | 63 | 5 | 22800 |
| 5 | 20 | Polyamide<br>ABS resin | 40<br>40 | 1 | 78 | 9 | 21400 |
| 6 | 20 | P-MMA | 80 | 5 | 85 | 3 | 24500 |
| 7 | 20 | PBT resin | 80 | 5 | 62 | 4 | 23600 |
| 8 | 20 | Polyamide<br>ABS resin | 20<br>60 | 5 | 75 | 12 | 16000 |
| Comp. | 20 | Polyamide<br>ABS resin | 40<br>40 | 0 | 81 | 7 | 21200 |

## Claims

**1.** A thermoplastic resin composition comprising

(A) a copolymer comprising (a) 10 to 95 % by weight of repeating units derived from methyl methacrylate and (b) 5 to 35 % by weight of (meth)acrylic acid repeating units and glutaric anhydride repeating units in which the glutaric anhydride repeating units is at least 55 % by weight of the both repeating units, and (c) 0 to 55 % by weight of repeating units derived from at least one other copolymerizable $\alpha,\beta$-ethylenically unsaturated monomer,
(B) at least one thermoplastic resin other than an olefin polymer, and
(C) an epoxy group-containing copolymer, wherein a weight ratio of the copolymer (A) to the thermoplastic resin (B) is from 1:99 to 99:1 and an amount of the epoxy group-containing copolymer (C) is from 0.1 to 50 parts by weight per 100 parts by weight of the total weight of the copolymer (A) and the thermoplastic resin (B).

**2.** The thermoplastic resin composition according to claim 1, wherein said repeating unit of glutaric anhydride in said copolymer (A) is represented by the formula:

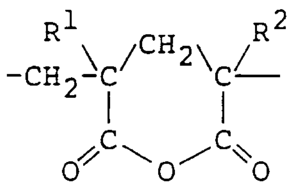

(I)

wherein $R^1$ and $R^2$ are the same or different and each a methyl group or a hydrogen atom.

**3.** The thermoplastic resin composition according to claim 1 or 2, wherein said other copolymerizable $\alpha,\beta$-ethylenically unsaturated monomer (c) is at least one monomer selected from (meth)acrylic acid esters, (meth)acrylic acid, styrene, $\alpha$-methylstyrene, vinyltoluene, chlorostyrene and acrylonitrile.

**4.** The thermoplastic resin composition according to any one of claims 1 to 3, wherein said thermoplastic resin (B) other than an olefin polymer is a resin comprising ethylene and/or propylene repeating units in an amount of 0 to less than 50 % by weight.

**5.** The thermoplastic resin composition according to any one of claims 1 to 3, wherein said thermoplastic resin (B) other than an olefin polymer is at least one resin selected from polyvinyl chloride, polystyrene, polymethyl methacrylate, styrene-acrylonitrile copolymer, styrene-methyl methacrylate-acrylonitrile copolymer, $\alpha$-methylstyrene-acrylonitrile-methyl methacrylate copolymer, ABS resin, AAS resin, AES resin, MBS resin, polyurethane, polyamide, polyacetal, polycarbonate, PPE, PBT, PET, PPS and PEEK.

**6.** The thermoplastic resin composition according to any one of claims 1 to 5, wherein said epoxy group-containing copolymer (C) is a copolymer comprising 0.1 to 50 % by weight of an epoxy group-containing $\alpha,\beta$-ethylenically unsaturated monomer and 50 to 99.9 % by weight of other $\alpha,\beta$-ethylenically unsaturated monomer.

**7.** The thermoplastic resin composition according to claim 6, wherein said epoxy group-containing $\alpha,\beta$-ethylenically unsaturated monomer is at least one monomer selected from glycidyl (meth)acrylate, glycidyl itaconate, allyl glycidyl ether, 2-methylallyl glycidyl ether and styrene-p-glycidyl ether.

European Patent Office

# EUROPEAN SEARCH REPORT

Application Number

EP 92 11 7727

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP-A-0 500 361 (ROHM AND HAAS)<br>* page 7, line 35 - line 47; claims 1,3-7; examples 9-19,23 *<br>--- | 1-3,5 | C08L33/02<br>//(C08L33/02, 101:00,63:00) |
| P,X | EP-A-0 464 560 (SUMITOMO)<br>* page 2, line 52 - page 3, line 6 *<br>* page 4, line 2 - line 29 *<br>* claims 1,3,8-10 *<br>--- | 1-4 | |
| P,A | EP-A-0 463 497 (SUMITOMO)<br>* page 8, line 28 - page 10, line 16 *<br>* page 10, line 55 - page 11, line 22 *<br>* page 15, line 4 - line 15 *<br>* page 16, line 3 - line 12 *<br>* claims 1-7,11-13 *<br>--- | 1-7 | |
| A | DATABASE WPIL<br>Week 8951,<br>Derwent Publications Ltd., London, GB;<br>AN 89-374156<br>& JP-A-1 279 974 (DAINIPPON) 10 November 1989<br>* abstract *<br>----- | 1-3 | TECHNICAL FIELDS SEARCHED (Int. Cl.5)<br>C08L |

The present search report has been drawn up for all claims

| Place of search | Date of completion of the search | Examiner |
|---|---|---|
| THE HAGUE | 20 JANUARY 1993 | ENGEL S.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document